# EUROPÄISCHE PATENTSCHRIFT

(11) **EP 1 707 077 B1**
(45) Veröffentlichungstag und Bekanntmachung des Hinweises auf die Patenterteilung: **19.08.2009**
(21) Anmeldenummer: 05026914.1
(22) Anmeldetag: 09.12.2005
(51) Int. Cl.: A47B 43/00, A47B 87/02, A01G 9/14

(54) **Lagerungsplattform zum Lagern und Bewässern von Pflanzen sowie Bewässerungsvorrichtung**
Storage tray for storing and watering plants, and watering device
Palette de stockage pour entreposer et irriguer des plantes, et dispositif d'irrigation

(30) Priorität: 31.03.2005 DE 202005005087 U
(43) Veröffentlichungstag der Anmeldung: 04.10.2006
(73) Patentinhaber: Korte, Hermann, Dipl.-Ing., 26903 Surwold (DE)
(72) Erfinder: Korte, Hermann, Dipl.-Ing., 26903 Surwold (DE); Schomaker, Rudolf, 49751 Segel (DE); Trinczek, Reinhold, 21514 Büchen (DE)
(74) Vertreter: Philipp, Matthias

(56) Entgegenhaltungen:
- EP-A- 1 393 617
- DE-A1- 3 619 262
- FR-A- 2 377 313
- US-A1- 2005 055 877

## Beschreibung

Die Erfindung betrifft eine Lagerungsplattform zum Lagern, Bewässern und Transportieren von Pflanzen, die rechteckig ist und an zwei parallelen Schmalseiten jeweils zwei Halterungselemente zum Einhängen in Gestellstreben aufweist, sowie eine damit gebildete Bewässerungsvorrichtung.

Die Halterungselemente derartiger bekannter, plattenförmiger Lagerungsplattformen wie z.B. in EP 1 393 617 A, mit denen das Einhängen in die Befestigungsöffnungen oder -schlitze von bspw. im Querschnitt U-förmigen Gestellstreben eines Halterungsgestells erfolgt, können sich in Längsrichtung der Lagerungsplattform erstrecken, so daß der Einsetz- bzw. Einhängevorgang in Längsrichtung der Lagerungsplattform erfolgt. Mit anderen Worten wird eine Lagerungsplattform in vier vertikale, an Ecken eines Rechtecks angeordneten Gestellstreben eingehängt, indem zunächst zwei Halterungselemente, die an einer gemeinsamen Stirn- oder Schmalseite der Lagerungsplattform angeordnet sind, in gewünschte Einhängeausnehmungen von zwei entsprechenden Gestellstreben eingesetzt werden, wobei die Lagerungsplattform hierbei aufgrund des festen gegenseitigen Abstands der vier Gestellstreben um eine Querachse, die senkrecht zu den Längsseiten der Lagerungsplattform verläuft, geneigt werden muß, um sie zwischen die Gestellstreben bewegen zu können. Nachdem die beiden genannten Halterungselemente vollständig bzw. weitestmöglich in ihre Einhängeausnehmungen eingeschoben worden sind, kann die Lagerungsplattform in eine horizontale Lage gebracht werden, so daß die verbleibenden, gegenüberliegenden Halterungselemente, die der anderen Schmalseite der Lagerungsplattform zugeordnet sind, in Ausrichtung mit entsprechenden Einhängeausnehmungen der anderen beiden Gestellstreben kommen und durch im wesentlichen horizontales Verschieben der Lagerungsplattform in diese eingeführt werden können. Meist sind Rastausnehmungen vorgesehen, so daß dann, wenn alle vier Halterungselemente etwa gleich tief in die entsprechenden Einhängeausnehmungen eingeschoben sind, diese mittels der Rastausnehmungen formschlüssig mit den Einhängeausnehmungen zusammenwirken und ein fester, unverschieblicher Halt gewährleistet ist.

Es sind ferner derartige Lagerungsplattformen bekannt, deren Halterungselemente, mit denen das Einhängen in die Befestigungsöffnungen oder -schlitze von bspw. im Querschnitt U-förmigen Gestellstreben eines Halterungsgestells erfolgt, sich in Querrichtung der Lagerungsplattform erstrecken, so daß der Einsetz- bzw. Einhängevorgang in Querrichtung der Lagerungsplattform erfolgt. Eine solche Lagerungsplattform wird in vier vertikale, an Ecken eines Rechtecks angeordneten Gestellstreben eingehängt, indem zunächst zwei Halterungselemente, die an einer gemeinsamen Längsseite der Lagerungsplattform angeordnet sind, in gewünschte Einhängeausnehmungen von zwei entsprechenden Gestellstreben eingesetzt werden. Hierbei muß die Lagerungsplattform aufgrund des festen gegenseitigen Abstands der vier Gestellstreben um eine Querachse, die senkrecht zu den Schmalseiten der Lagerungsplattform verläuft, geneigt werden, um sie zwischen die Gestellstreben bewegen zu können. Nachdem zwei Halterungselemente in ihre Einhängeausnehmungen eingeschoben worden sind, kann die Lagerungsplattform in eine horizontale Lage gebracht werden, so daß die verbleibenden, gegenüberliegenden Halterungselemente, die der anderen Längsseite der Lagerungsplattform zugeordnet sind, in Ausrichtung mit entsprechenden Einhängeausnehmungen der anderen beiden Gestellstreben kommen und durch im wesentlichen horizontales Verschieben der Lagerungsplattform in diese eingeführt werden können. Auch hier sind meist Rastausnehmungen vorgesehen, so daß dann, wenn alle vier Halterungselemente etwa gleich tief in die entsprechenden Einhängeausnehmungen eingeschoben sind, diese mittels der Rastausnehmungen formschlüssig mit den Einhängeausnehmungen zusammenwirken und ein fester, unverschieblicher Halt gewährleistet ist.

Diese Anordnungen haben sich in der Praxis bewährt. Bisweilen ist allerdings nachteilig, daß das Ein- und Aushängen der Lagerungsplattform wegen der erforderlichen Hin- und Herbewegungen als relativ zeitraubend empfunden wird.

Die Aufgabe der Erfindung besteht darin, eine Lagerungsplattform anzugeben, bei der das Einsetzen und Herausnehmen in die bzw. aus den Gestellstreben schneller und einfacher möglich ist.

Diese Aufgabe wird erfindungsgemäß durch eine Lagerungsplattform zum Lagern und Bewässern von Pflanzen gelöst, die rechteckig ist und an zwei parallelen Schmalseiten jeweils zwei Halterungselemente zum Einhängen in Gestellstreben aufweist, wobei sich die Lagerungsplattform dadurch auszeichnet, daß jedes Halterungselement einen entlang der jeweiligen Schmalseite verlaufenden und in Richtung einer ersten Längsseite frei endenden Einhänge-Endabschnitt aufweist.

Hierdurch wird ein Einsetzen oder Herausnehmen der Lagerungsplattform in Querrichtung im Zuge einer einzigen Bewegung in nur einer Richtung ermöglicht, so daß die vorstehend erläuterten Nachteile vermieden werden. Die Bezeichnung "Einsetzen in Querrichtung" bedeutet im Rahmen der vorliegenden Erfindung, daß die rechteckige Lagerungsplattform beim Einsetzen oder Herausnehmen der Einhänge-Endabschnitte der Halterungselemente in damit zusammenwirkende Aufnahmemittel der Gestellstreben, z.B. Einhängeausnehmungen, lediglich in ihrer Querrichtung hin- oder herbewegt werden muß, um die Halterungselemente in oder außer Eingriff zu bringen, nicht hingegen in ihrer Längsrichtung. Außerdem ist keinerlei kombinierte, aufeinanderfolgende Hin- und Herbewegung erforderlich, sondern nur eine Bewegung in einer einzigen Richtung.

Die Erfindung sieht vor, daß entweder zwei oder aber alle vier Einhänge-Endabschnitte der Halterungselemente jeweils in einem Eckbereich der Lagerungsplattform angeordnet sind. In einer ersten Variante bedeutet dies, daß zwei der ersten Längsseite benachbarte Einhänge-Endabschnitte in der ersten Längsseite zugeordneten Eckbereichen der Lagerungsplattform angeordnet sind, während die zwei anderen Einhänge-Endabschnitte in den gegenüberliegenden Eckbereichen angeordnet sind. In einer zweiten Variante sind zwei der ersten Längsseite benachbarte Einhänge-Endabschnitte in der ersten Längsseite zugeordneten Eckbereichen der Lagerungsplattform angeordnet, während die zwei anderen Einhänge-Endabschnitte an zwischen den Längsseiten liegenden Positionen angeordnet sind, d.h. in bezug auf die Eckposition versetzt in Richtung zur Mitte der jeweiligen Schmalseite.

Die Halterungselemente können abgewinkelt, bspw. L-förmig ausgebildet sein und einen Halteschenkel und einen den Einhänge-Endabschnitt bildenden Einhängeschenkel aufweisen.

Die Halteschenkel können an einer Seitenwand befestigt sein, und die Einhänge-Endabschnitte können mindestens eine Ausnehmung, insbesondere zwei gegenüberliegende Ausnehmungen, zum formschlüssigen Einhängen in Gestellstreben aufweisen.

Die Schmalseiten zwischen den Halterungselementen sind bevorzugt jeweils mit einer Erweiterung versehen, innerhalb der jeweils ein Überlauf angeordnet sein kann.

Die Erfindung sieht weiter bevorzugt vor, daß die Lagerungsplattform wannenartig ausgebildet ist und einen Überlauf zum Vorgeben eines gewünschten Flüssigkeitspegels aufweist. Hierfür kann die Lagerungsplattform mit Seitenwänden versehen sein. Der Überlauf kann zum Einstellen eines gewünschten Flüssigkeitspegels stufenlos oder stufenweise höhenverstellbar sein. Weiterhin kann der Überlauf ein rohrförmiges Ableitelement aufweisen, das fest oder höhenverstellbar in einer Öffnung in der Lagerungsplattform gehalten ist. Hierbei kann der Überlauf oder das Ableitelement stufenweise oder stufenlos höhenverstellbar sein. Das Ableitelement oder der Überlauf kann optische Markierungen und/oder mechanische Rastmittel in vorbestimmten Positionen aufweisen und kann mit mindestens einer seitlich gerichteten Abflußöffnung versehen sein. Außerdem kann der Überlauf oder das Ableitelement drehbar, ggf. mit Begrenzung des Drehwinkels, in der Öffnung gehalten sein. Dadurch kann in einer Bewässerungsvorrichtung der ablaufende Wasserstrahl genau auf eine unterhalb befindliche Lagerungsplattform gerichtet werden.

Zur Bildung des Überlaufs kann einer Öffnung in einer Seitenwand der Lagerungsplattform ein höhenverstellbares Schiebeelement zugeordnet sein.

In bezug auf die Bewässerungsvorrichtung wird die Aufgabe der Erfindung durch eine Bewässerungsvorrichtung mit mindestens zwei übereinander angeordneten Lagerungsplattformen zum Lagern und Bewässern von Pflanzen gelöst, die rechteckig sind und an zwei parallelen Schmalseiten jeweils zwei Halterungselemente zum Einhängen in Einhängeausnehmungen von Gestellstreben aufweisen, mit vier vertikalen Gestellstreben, die in Eckbereichen der Lagerungsplattformen angeordnet und mit Einhängeausnehmungen zum Einhängen der Halterungselemente versehen sind, wobei jedes Halterungselement einen entlang der jeweiligen Schmalseite verlaufenden und in Richtung einer ersten Längsseite frei endenden Einhänge-Endabschnitt aufweist. Dadurch ist gewährleistet, daß die Lagerungsplattformen in Querrichtung und ohne Hin- und Herbewegung einsetz- und herausnehmbar sind.

Die Lagerungsplattformen können so angeordnet sein, daß eine über einen Überlauf einer (jeder) Lagerungsplattform ablaufende Flüssigkeit in eine darunter, insbesondere zunächst benachbart angeordnete Lagerungsplattform fließen kann

Die Gestellstreben sind bevorzugt L-, U-, C-, Rechteck- oder auch Rohrprofile.

Weitere Vorteile und Merkmale der Erfindung ergeben sich aus der nachfolgenden Beschreibung von Ausführungsbeispielen, wobei auf eine Zeichnung Bezug genommen wird, in der
Fig. 1 eine Draufsicht auf eine erste Ausführungsform einer erfindungsgemäßen Lagerungsplattform zeigt,
Fig. 2 eine perspektivische Ansicht der Lagerungsplattform nach Fig. 1 zeigt,
Fig. 3 einen vergrößerten Teilbereich der Lagerungsplattform nach Fig. 1 und 2 zeigt,
Fig. 4 eine Schnittansicht eines Überlaufs der Lagerungsplattform nach Fig. 1 - 3 zeigt,
Fig. 5 eine perspektivische Ansicht einer Sockelplattform nach einer ersten Ausführungsform zeigt,
Fig. 6 eine Draufsicht auf die Sockelplattform nach Fig. 5 zeigt,
Fig. 7 eine perspektivische Ansicht von mehreren aufeinander gestapelten Sockelplattformen nach Fig. 5 und 6 zeigt, in Richtung VII in Fig. 6 gesehen,
Fig. 8 eine Seitenansicht entsprechend Fig. 7 zeigt,
Fig. 9 eine perspektivische Ansicht einer erfindungsgemäßen Bewässerungsvorrichtung in einer ersten Ausführungsform zeigt,
Fig. 10 die Bewässerungsvorrichtung nach Fig. 9 aus einem anderen Blickwinkel zeigt,
Fig. 11 die Bewässerungsvorrichtung nach Fig. 9 und 10 in einer Vorderansicht zeigt,
Fig. 12 eine Draufsicht auf eine Lagerungsplattform nach einer zweiten Ausführungsform zeigt,
Fig. 13 eine Draufsicht auf eine Sockelplattform nach einer zweiten Ausführungsform zeigt,
Fig. 14 eine perspektivische Ansicht einer erfindungsgemäßen Bewässerungsvorrichtung nach einer zweiten Ausführungsform zeigt,
Fig. 15 die Bewässerungsvorrichtung nach Fig. 14 aus einem anderen Blickwinkel zeigt,
Fig. 16 eine schematische Ansicht einer Gestellstrebe zeigt,
Fig. 17 einen Eckbereich einer umgekehrt eingehängten Lagerungsplattform zeigt,
Fig. 18 eine umgekehrte Stapelung von Lagerungsplattformen zeigt,
Fig. 19 ein Zentrierelement zur Zentrierung aufgelegter Lagerungsplattformen zeigt, und
Fig. 20 und 21 ein zusätzliches Zentrierelement erläutern.

Bei bekannten, rechteckigen, ebenen Lagerungsplattformen sind Halterungselemente in Form von an Schmalseiten in Längs- oder Querrichtung vorstehenden Einhänge-Endabschnitten wie Haken, Stifte o.ä. ausgebildet. Eine derartige Lagerungsplattform ist zum Einhängen bzw. Einsetzen in ein Gestell vorgesehen, das vier vertikale Gestellstreben aufweist, die an den Ecken eines Rechtecks angeordnet sind. Die gegenseitigen lichten Abstände der Gestellstreben und die Maße der Lagerungsplattform sind so aufeinander abgestimmt, daß die Lagerungsplattform in der nachstehend erläuterten Weise in Längsrichtung in das Gestell bzw. die Gestellstreben eingesetzt werden kann. Hierbei werden zunächst zwei Haken mit ihren freien Endabschnitten (nachfolgend auch als Einhänge-Endabschnitte bezeichnet), die sich an einer gemeinsamen Längs- oder Schmalseite einer Lagerungsplattform befinden, in entsprechende Einhängeausnehmungen von zwei an einer Längs- oder Schmalseite des genannten Rechtecks angeordneten Gestellstreben eingesetzt und weitestmöglich in diese eingeschoben, indem die Lagerungsplattform in ihrer Quer- oder Längsrichtung bewegt wird. Bei diesem Vorgang muß die Lagerungsplattform schräg geneigt sein, um einen Handhabungsabstand zwischen den Haken und Gestellstreben, die den einzusetzenden bzw. bereits eingesetzten Haken gegenüberliegen, zu schaffen. Ausgehend von dieser geneigten Position kann die Lagerungsplattform nun, nachdem zwei Haken eingesetzt sind, in eine im wesentlichen horizontale Lage gebracht werden, so daß die Haken der gegenüberliegenden Seite der Lagerungsplattform in Ausrichtung mit entsprechenden Einhängeausnehmungen der gegenüberliegenden Gestellstreben des Gestells kommen und unter Bewegung der Lagerungsplattform in entgegengesetzter Richtung in diese eingeführt werden können. Dabei werden die zuvor eingesetzten und vollständig eingeschobenen Haken teilweise wieder herausbewegt, bis sich letztlich alle vier Einhänge-Endabschnitte in etwa gleich tief in den vier Einhängeausnehmungen der Gestellstreben befinden. In dieser Stellung können Ausnehmungen der Einhänge-Endabschnitte mit den Rändern der Ausnehmungen der Gestellstreben formschlüssig zusammenwirken, so daß die Lagerungsplattform in ihrer gewünschten Lage fixiert ist.

Bei der erfindungsgemäßen Ausbildung der Lagerungsplattform ist die vorstehend beschriebene Hin- und Herbewegung der Lagerungsplattform nicht erforderlich, da die Ausbildung der Halterungselemente ein Einsetzen in Querrichtung mit einer einzigen Bewegung ermöglicht.

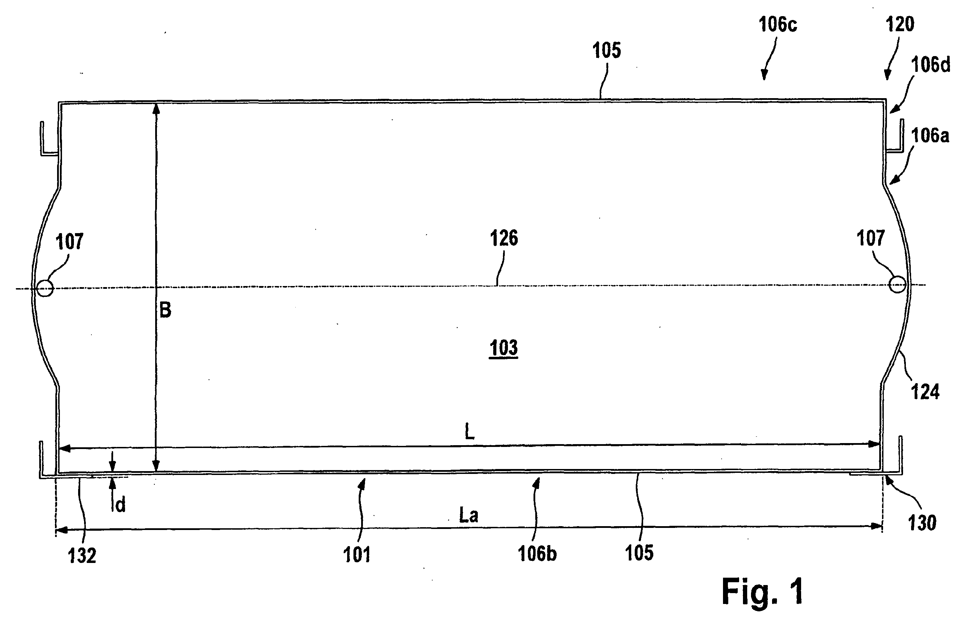

Fig. 1 bis 3 erläutern den Aufbau einer ersten Ausführungsform einer erfindungsgemäßen Lagerungsplattform 101, die wannenartig mit Seitenwänden ausgebildet ist und einen höhenverstellbaren Überlauf aufweist, um einen gewünschten Flüssigkeitspegel innerhalb der wannenartigen Lagerungsplattform vorzugeben. Dies hat den Vorteil, daß das von den Pflanzen nicht sofort aufgenommene Wasser nicht sogleich abfließt, sondern der Wasserstand durch die Seitenwände gehalten und durch den Überlauf gesteuert wird und bei einer Anordnung mehrerer Lagerungsplattformen übereinander das Wasser von einer Lagerungsplattform in die nächst tiefere fließen kann. Die Anzahl und Anordnung der Überläufe in jeder einzelnen Lagerungsplattform folgt Zweckmäßigkeitsüberlegungen.

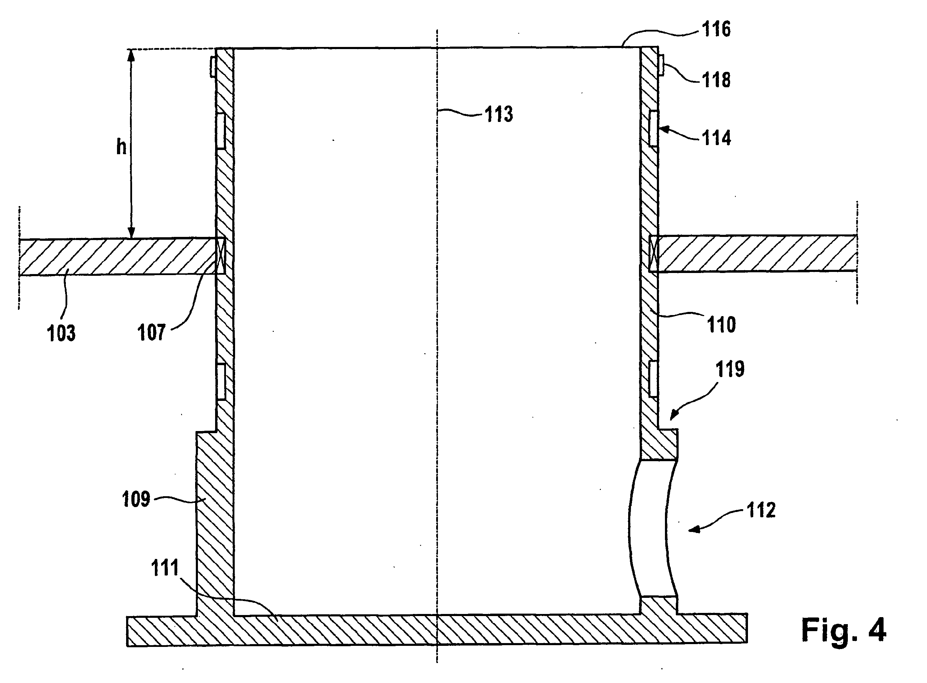

Die Lagerungsplattform 101 ist im Ganzen rechteckig mit einem Boden 103, Seitenwänden 105, Längsseiten 106b, 106c und Schmalseiten 106a, Ecken 120 sowie zwei Öffnungen 107, in denen sich hier nicht dargestellte Überläufe 109 (weiter unten im Zusammenhang mit Fig. 4 erläutert) befinden. Im Bereich der Schmalseiten 106a ist jeweils eine Erweiterung 124 vorgesehen, innerhalb der die Öffnung 107 angeordnet ist. Die Erweiterung 124 ist im dargestellten Ausführungsbeispiel kreisbogenförmig, könnte allerdings auch anders geformt sein, beispielsweise rechteckig, dreieckig oder in sonstiger Weise. Der Zweck der Erweiterung 124 besteht darin, die Öffnung 107 bzw. den Überlauf 109 außerhalb einer rechteckigen Lagerungsfläche mit Abmessungen L x B anordnen zu können, die durch die Längsseiten 106b, c und durch gerade Abschnitte 106d der Schmalseiten 106a oder anders gesagt durch die Ecken 120 der Lagerungsplattform 101 festgelegt ist (Länge L, Breite B der inneren Nutz- oder Standfläche der Lagerungsplattform).

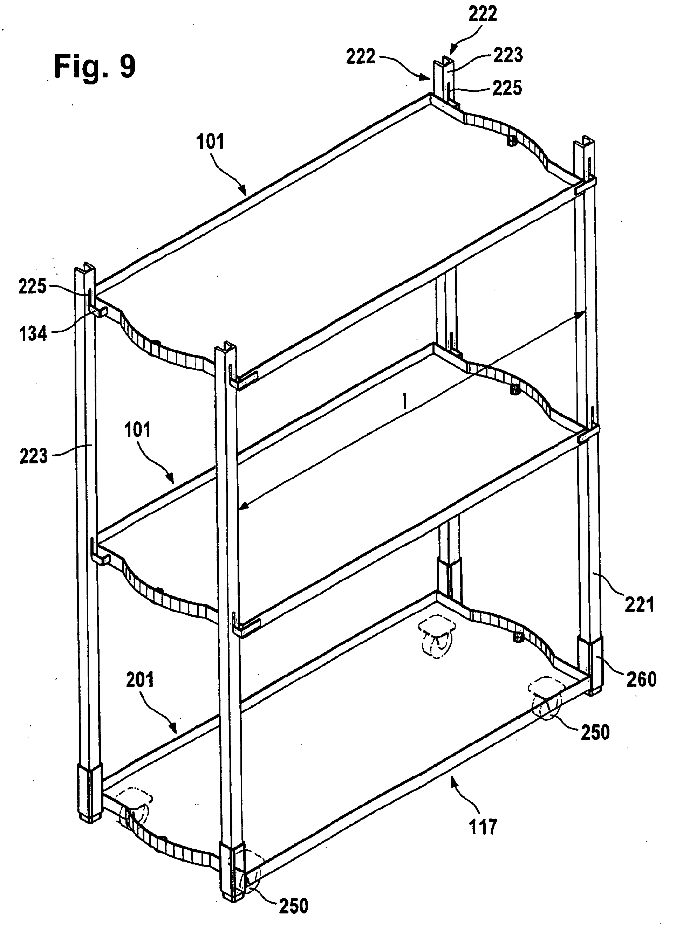

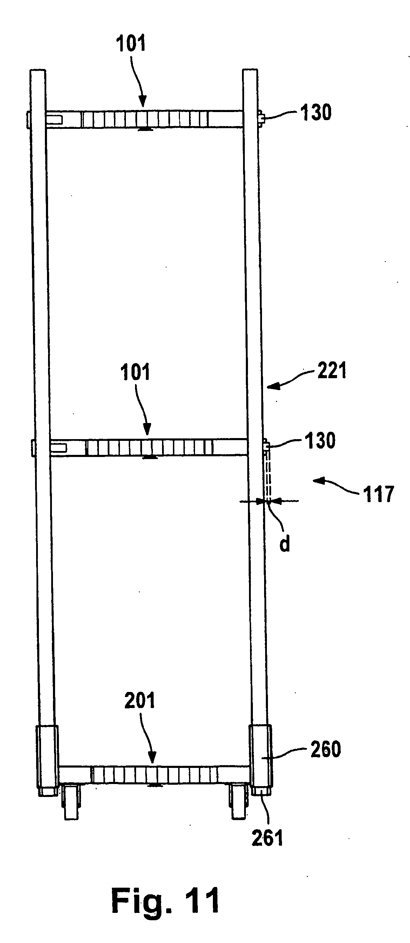

Eine Anordnung des Überlaufs 109 innerhalb der genannten rechteckigen Lagerungsfläche der Lagerungsplattform wäre nachteilig. Das liegt daran, daß eine Aufstellung von Pflanzgefäßen auf der Lagerungsplattform meist in rechteckigen Sammelboxen zu beispielsweise jeweils sechs einzelnen Pflanzgefäßen erfolgt, wobei die Länge eine Sammelbox der Breite B der Lagerungsplattform und deren Breite einem ganzzahligen Bruchteil von deren Länge L entspricht. Eine derartige Aufstellung ist ausschließlich innerhalb der genannten rechteckigen Lagerungsfläche möglich, andernfalls man eine Box weniger stellen könnte. Andererseits ist die Länge L der Lagerungsfläche dadurch vorgegeben, daß die Abmessungen und gegenseitigen Abstände von Gestellstreben bei einer Bewässerungsvorrichtung entsprechend Figur 9 bis 11 in der Praxis aufgrund einer großen Anzahl bereits existierender Bewässerungsvorrichtungen vorgegeben ist. Dabei sind mittelbar auch die Abmessungen L, B der Lagerungsplattform vorgegeben, innerhalb der sich kein Überlauf befinden sollte.

Figur 4 zeigt eine Ausführungsform eines Überlaufs oder Ableitelements 109, der in die Öffnung 107 des Bodens 103 eingesetzt ist.

Der Überlauf 109 besteht aus einem in einer Richtung (oben) offenen zylindrischen Grundkörper 110, der an einem unteren Ende mit einer kreisförmigen Bodenwand 111 abgeschlossen ist. Eine Abflußöffnung 112 ermöglicht das Abfließen von Wasser, das von oben über einen Rand 116 in den zylindrischen Grundkörper 110 einströmt. Durch Drehen des Überlaufs 109 um seine Längsachse 113 kann die Richtung der Abflußöffnung 112 und damit die Abflußrichtung des ausströmenden Wassers bestimmt werden. Dadurch kann sichergestellt werden, daß der ablaufende Wasserstrahl auf eine darunter befindliche Lagerungsplattform trifft. Auch eine Arretierung bzw. Begrenzung des Drehwinkels kann vorgesehen sein. Selbstverständlich sind auch mehrere Abflußöffnungen 112 möglich, die über den Umfang des Grundkörper 110 verteilt angeordnet sind. Die Bodenwand kann zur Bildung einer Revisionsöffnung ganz oder teilweise abklappbar oder mit einer Öffnung und einem Verschlußelement versehen sein.

Wie Figur 4 weiter zeigt, ist der Grundkörper 110 auf seiner Außenseite mit mehreren Rastelementen 114 (Ausnehmungen oder Vorsprünge) versehen, die eine Höheneinstellung in vorgegebenen Abständen ermöglichen, d.h. so, daß der obere Rand 116 des Grundkörpers 110 in einer gewünschten Höhe h oberhalb des Bodens 103 steht, wodurch ein maximaler Wasserstand oder Pegel h auf dem Boden vorgegeben ist.

Wegen des Anschlags 118 bleibt auch bei ganz abgesenktem Überlauf 109 stets ein Rest an Wasser in der Lagerungsplattform stehen. Wenn eine Restentleerung gewünscht ist, kann dies durch Anordnen einer Ausklinkung in dem Überlauf und/oder durch Vorsehen einer Vertiefung im Boden 103 im Bereich der Öffnung 107 erfolgen. Außerdem kann vorgesehen sein, daß der Boden 103 in sich gebogen bzw. gewölbt ausgebildet ist, so daß zum einen eine größere Stabilität erzielt wird und zum anderen ein Gefälle erreicht wird, so daß das Wasser stets in Richtung auf den bzw. die Überläufe abfließt. Dadurch ist gewährleistet, daß die Lagerungsplattform ganz entleert werden kann und beim Herausnehmen praktisch wasserfrei ist.

Anstelle der Rastelemente 114 können auch optische Markierungen vorgesehen sein, die eine Einstellung einer gewünschten Höhe h erleichtern. Im Bereich des oberen Rands 116 ist ein Anschlag 118 vorgesehen, der ein vollständiges Herausziehen des Überlaufs 109 aus der Öffnung 107 verhindert oder zumindest erschwert. Ein Absatz 119 legt einen maximal einstellbaren Pegel fest (Überlauf 109 ganz nach oben geschoben).

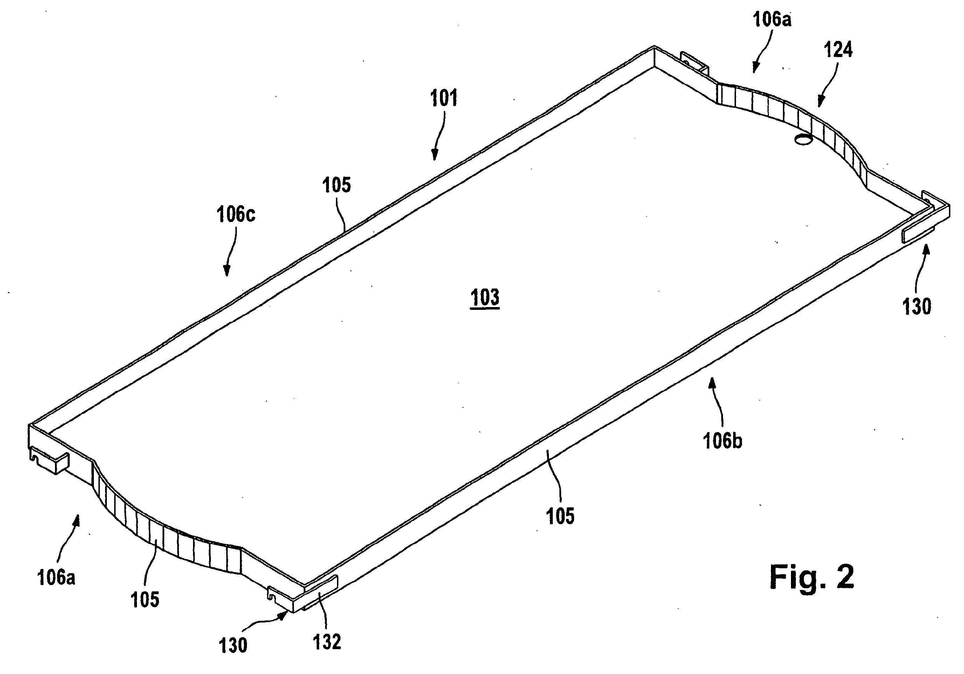

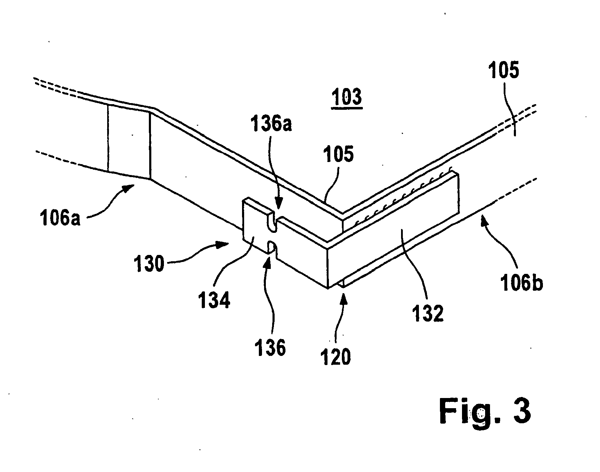

Wie Figur 1 und 2 und insbesondere Figur 3 in vergrößertem Maßstab zeigen, sind an den Seitenwänden 105 im Bereich der Schmalseiten 106a der Lagerungsplattform 101 in der Nähe der Ecken 120 bzw. in der Nähe der Längsseiten 106b, 106c Halterungselemente 130 angeordnet, die in der dargestellten Ausführungsform abgewinkelt oder L-förmig ausgebildet sind und jeweils einen Halteschenkel 132 aufweisen, der an einer Seitenwand 105 (im Bereich 106b oder 106a) befestigt ist, bspw. angeschweißt ist, sowie einen von dem Halteschenkel abgehenden Einhängeschenkel 134. Alle Einhängeschenkel 134 enden frei in Richtung auf eine Längsseite 106c (auch als "erste Längsseite" bezeichnet) und sind senkrecht zu dieser und parallel zu der jeweiligen Schmalseite 106a angeordnet. Wie insbesondere Figur 3 zeigt, weist jeder Einhängeschenkel 134 eine V-förmige, halbkreis- oder schlitzförmige Ausnehmung 136 auf, damit die Lagerungsplattform 101 in noch zu erläuternder Weise in Gestellstreben einer Bewässerungsvorrichtung eingehängt werden kann. Zusätzlich kann der Einhängeschenkel 134 mit einer zweiten Ausnehmung 136a versehen sein, die ein umgedrehtes Einhängen ermöglicht, was noch erläutert wird.

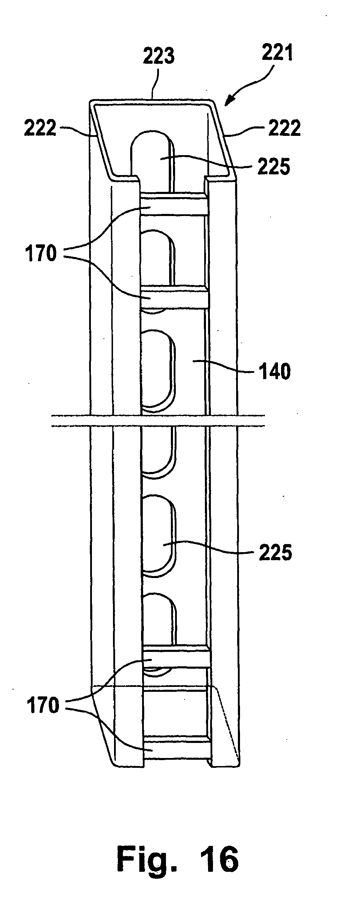

Zwei der vier Halterungselemente 130 müssen seitlich geringfügig über die Längsseite 106b überstehen, und zwar um ein Dicken- oder Wandstärkemaß d des Halteschenkels 132, damit die vier Gestellstreben 221 (Fig.16 und Fig. 9 bis 11) genau in den Eckbereichen der Lagerungsplattform angeordnet werden können, so daß die Außenkanten oder -flächen der Gestellstreben mit den Längsseiten 106b, c in einer Ebene liegen.

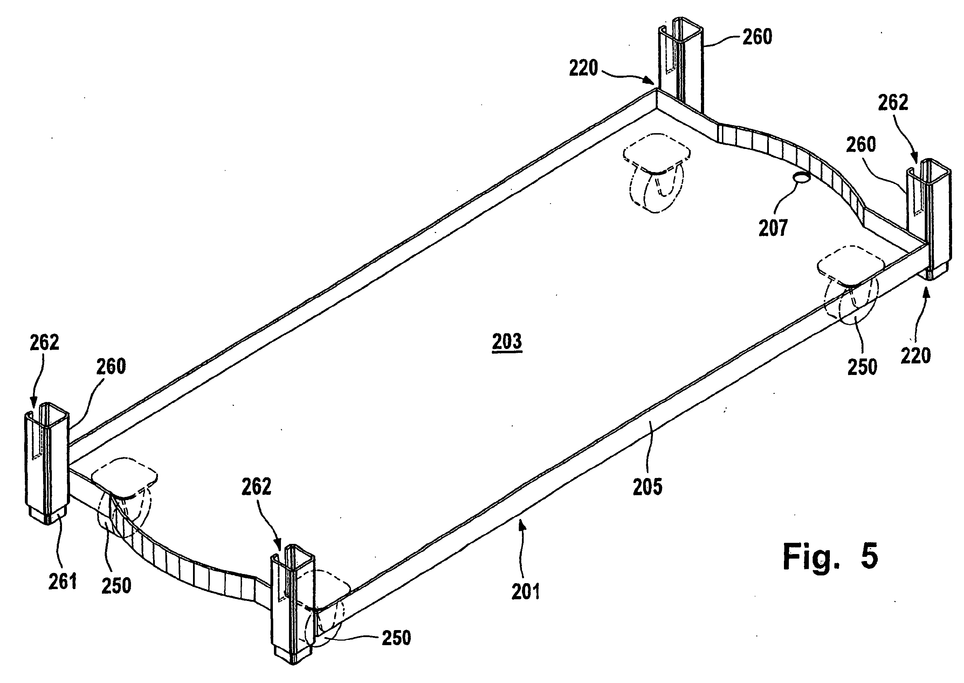

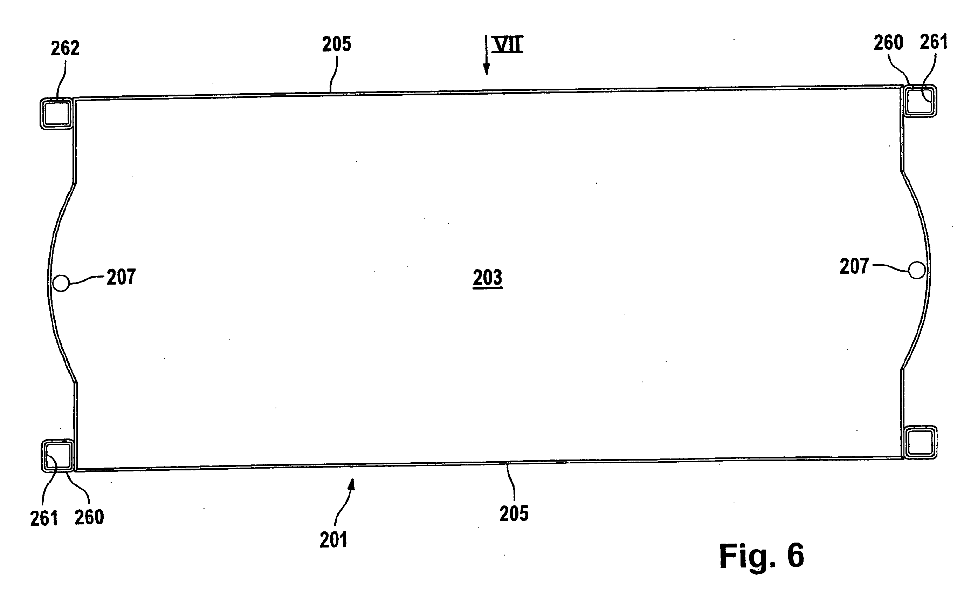

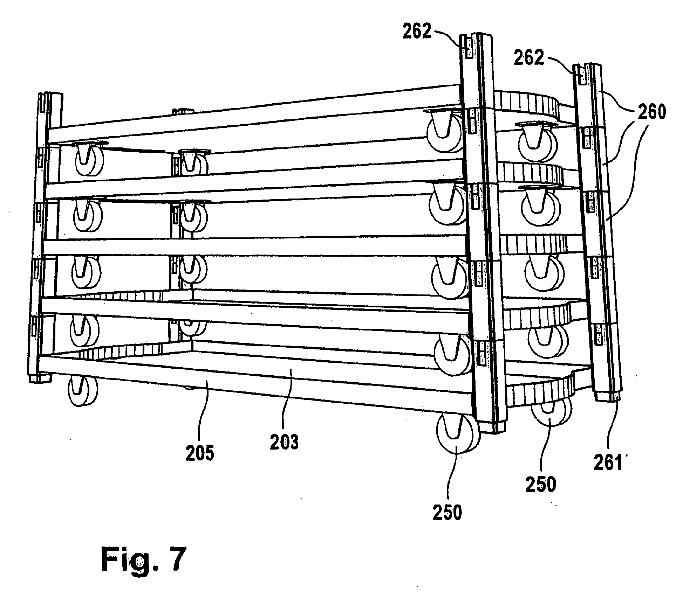

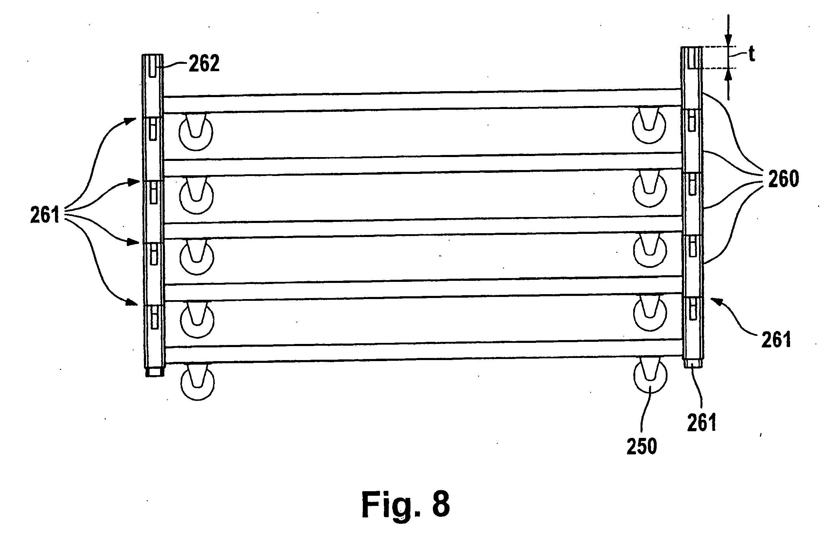

Figur 5 bis 8 erläutern schematisch eine erste Ausführungsform einer Sockelplattform 201 zur Bildung einer erfindungsgemäßen Bewässerungsvorrichtung (Fig. 9 bis 11). Die Sockelplattform weist ein nicht gesondert dargestelltes Untergestell mit unterseitig angebrachten Rollen 250 auf, an dem im Bereich der Ecken 220 jeweils ein Aufnahmemittel 260 für eine (weiter unten noch erläuterte und in Figur 16 dargestellte) Gestellstrebe 221 angebracht ist. Ein Boden 203 und eine umlaufende Seitenwand 205 bilden eine wannenartige Aufnahme für Pflanzen o.ä. Die Aufnahmemittel 260 sind in diesem Beispiel in den Eckbereichen angeordnete, hier an Boden 203 und Seitenwänden 205 befestigte Vierkantrohre mit quadratischem Querschnitt, in deren unterem Bereich Anschlagteile 261 in Form von kleineren und kürzeren Vierkantrohrstücken eingesetzt sind, deren Außenkontur der Innenkontur der Vierkantrohre 260 entspricht. Durch diese Maßnahme wird einerseits ein Anschlag für eine von oben in die Aufnahmemittel 260 eingeschobene Gestellstrebe geschaffen, wobei eine Außenkontur der Gestellstrebe im wesentlichen der Innenkontur des Aufnahmemittels 260 entspricht oder zumindest in diese hineinpaßt, und andererseits wird durch die nach unten vorstehenden Bereiche der Anschlagteile 261 eine Stapelbarkeit mehrerer Sockelplattformen 201 erreicht, was in Figur 7 und 8 dargestellt ist. Selbstverständlich könnten die Aufnahmemittel 260 eine andersartige Querschnittsform aufweisen, z.B. zur Aufnahme von Gestellstreben mit nichtquadratischem Querschnitt (rechteckig, C-, U- oder L-förmig, rund oder in sonstiger Weise geformt). Alternativ zu der Bauweise mit Untergestell können die Aufnahmemittel 260 an den Seitenwänden 205 und die Rollen an dem Boden 203 angebracht sein.

Figur 20 und 21 zeigen in vergrößertem Maßstab eine Draufsicht und eine perspektivische Ansicht eines Eckbereichs der Sockelplattform nach Fig. 5, wobei eine Variante mit einem zusätzlichen Zentrierelement 263 dargestellt ist. Zusätzlich zu dem bereits erläuterten Anschlag 261, der gleichzeitig eine Halte- und Zentrierungsfunktion beim Stapeln mehrerer Sokkelplattformen 201 übereinander erfüllt (Fig. 7 und 8), kann ein zusätzliches Zentrierelement 263 vorgesehen sein, das einen massiven oder rohrartigen Vierkantquerschnitt aufweist und dessen äußerer Querschnitt dem inneren Querschnitt des Vierkantrohrstücks 261 entspricht. Das Zentrierelement 263 ragt einerseits in den Anschlag 261 vor und ist darin fixiert, beispielsweise eingeschweißt, und steht andererseits ein Stück weit nach unten daraus hervor, wie Fig. 21 zeigt, so daß die Möglichkeit besteht, eine Sockelplattform 201 zu oberst auf eine Bewässerungsvorrichtung nach Fig. 9 zu stellen, wobei dann die Zentrierelemente 263 jeweils in eine Gestellstrebe 221 fassen. Wenn sichergestellt ist, daß die Zentrierelemente 263 nicht seitlich aus den Gestellstreben 221 herausgleiten können, bspw. durch Stege 170 (Fig. 16), ergibt sich auf diese Weise eine zusätzliche vorteilhafte Stapelmöglichkeit, die entsprechend auch bei einer Sockelplattform 201' anwendbar ist, welche noch erläutert wird.

Figur 9 bis 11 zeigen unterschiedliche Ansichten einer ersten Ausführungsform einer erfindungsgemäßen Bewässerungsvorrichtung, mit einer Sockelplattform 201 gemäß Figur 5 bis 8, zwei Lagerungsplattformen 101 gemäß Figur 1 bis 3 und vier in die Aufnahmemittel 260 der untersten Lagerungsplattform 201 eingesetzten Gestellstreben 221.

Die Gestellstreben 221 sind hier als U-Profile ausgebildet, deren Querschnittsform bzw. Außenkontur quadratisch ist (gleiche Steg- und Schenkellänge) und die mit geringem Spiel in die Aufnahmemittel 260 einsetzbar sind, wobei die Anschläge 261 eine definierte Einsetztiefe der Gestellstreben vorgeben. Ihr lichter Abstand 1, in Längsrichtung der Lagerungsplattformen gesehen, entspricht der Außenlänge La (Fig. 1) der Lagerungsplattformen.

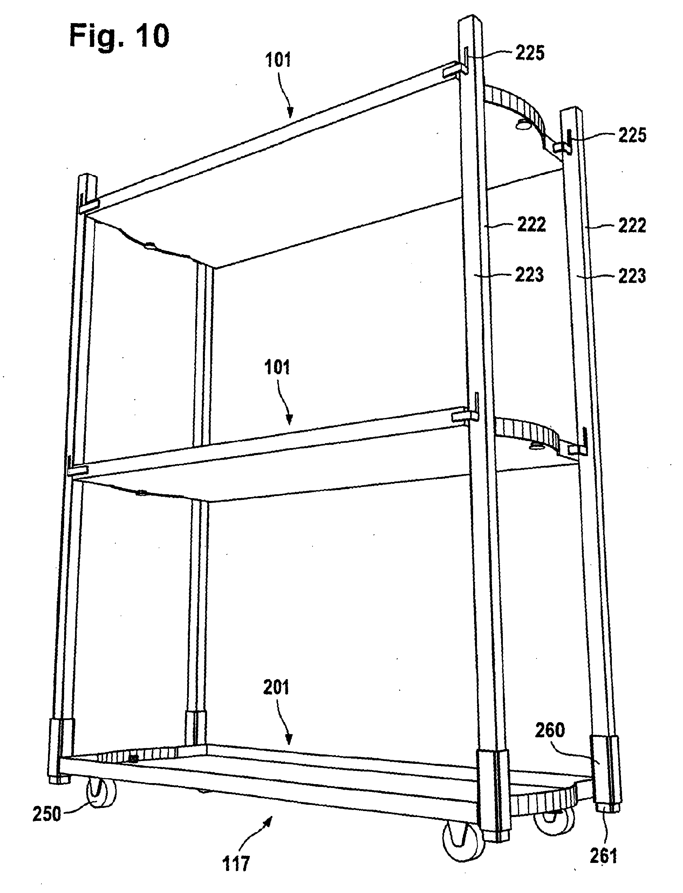

Wie Figur 9 und 10 weiterhin zeigen, sind die Gestellstreben 221 so in die Aufnahmemittel 260 eingesetzt, daß Schenkelabschnitte 222 senkrecht zu den Längsseiten 106b, c der Lagerungsplattformen 102, 201 sind, während Stegabschnitte 223 der Gestellstreben 221, die die Schenkelabschnitte 222 verbinden, im wesentlichen parallel zu den Längsseiten 106b, c und bezüglich der Schenkelabschnitte in ein und dieselbe Richtung weisend (Fig. 9, 10 nach rechts vom) angeordnet sind. Die Stegabschnitte 223 sind jeweils in einer gewünschten Höhe mit senkrechten bzw. in Längsrichtung der Streben verlaufenden Einhängeschlitzen oder - ausnehmungen 225 (s. auch Fig. 16) versehen, in die die Einhängeschenkel 134 eingehängt sind. Dabei umgreifen die Ausnehmungen 136 die Stegabschnitte 223, wobei die Breite der Ausnehmungen 136 im wesentlichen der Wandstärke des Materials der Stegabschnitte 223 entspricht.

Wenn die Einhänge-Endabschnitte der Lagerungsplattform mit je zwei gegenüberliegenden Ausnehmungen 136, 136a (Fig. 3) versehen sind, können die Lagerungsplattformen zur Lagerung oder zum Transport (ohne Pflanzen) mit ihrer Oberseite nach unten weisend eingehängt werden, so daß sich kein Regenwasser darin sammeln kann.

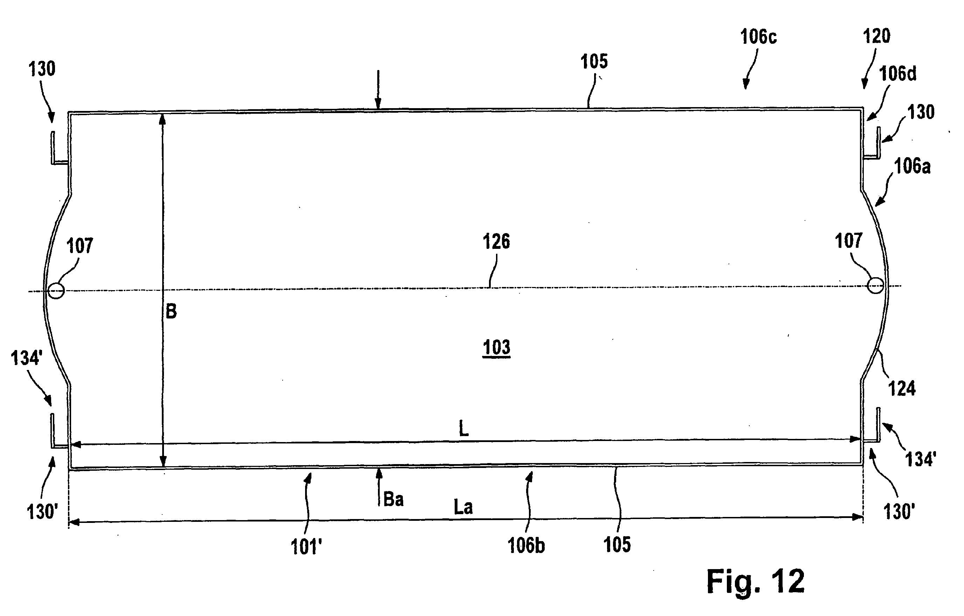

Fig. 12 zeigt eine Draufsicht auf eine Lagerungsplattform 101' nach einer zweiten Ausfiihrungsform, die im wesentlichen mit der Lagerungsplattform 101 übereinstimmt. Der einzige Unterschied liegt in der Anordnung der in Fig. 12 unten dargestellten Halterungselemente 130', die im Vergleich zu der Ausführung nach Fig. 1 bis 3 in Richtung auf die Mitte der jeweiligen Schmalseite 106a der Lagerungsplattform verlagert sind. Insbesondere sind die Einhängeschenkel 134' der beiden verlagert angebrachten Halterungselemente 130' so positioniert, daß die zugehörigen Gestellstreben, in die sie einzuhängen sind, ebenfalls im Vergleich zu der Anordnung nach Fig. 9 verlagert sind. Der Vorteil dieser Ausführung besteht darin, daß die Halterungselemente 130' nicht, wie dies bei Fig. 1 der Fall ist, seitlich um ihre Wandstärke nach außen überstehen, sondern vollständig innerhalb der durch die Längsseiten 106b, c vorgegebenen äußeren Breitenabmessung Ba der Lagerungsplattform angeordnet sind.

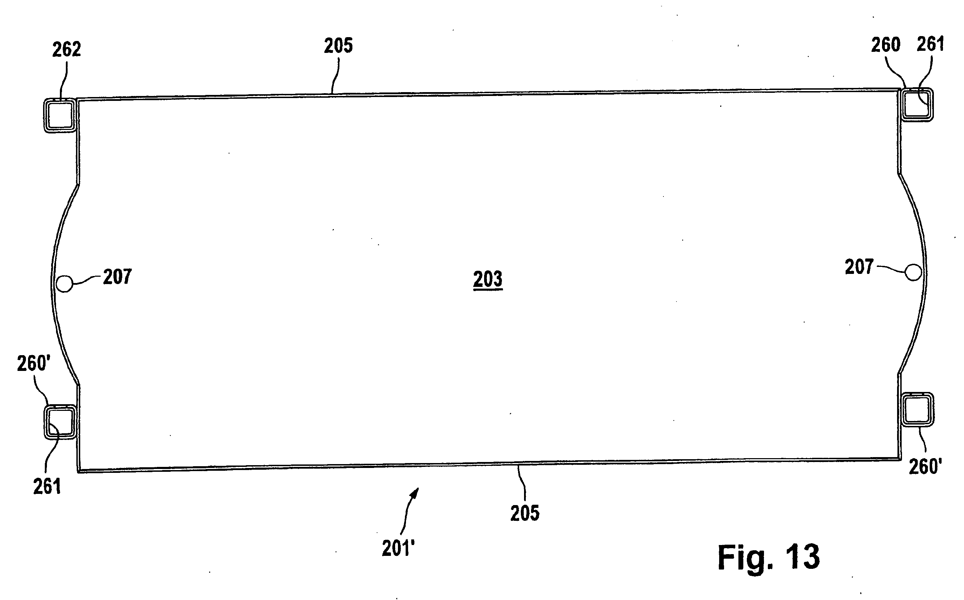

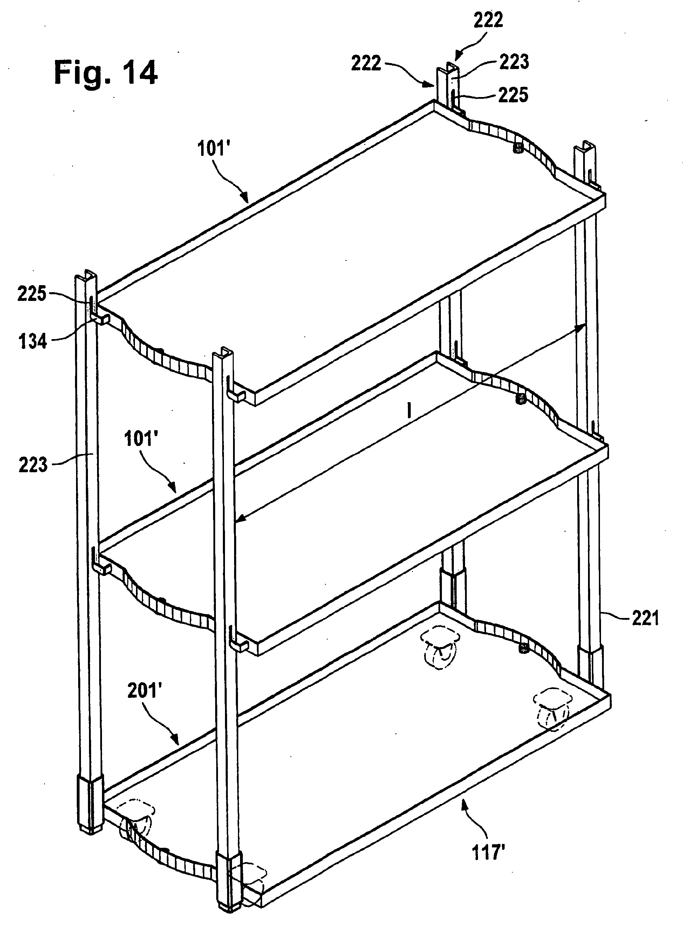

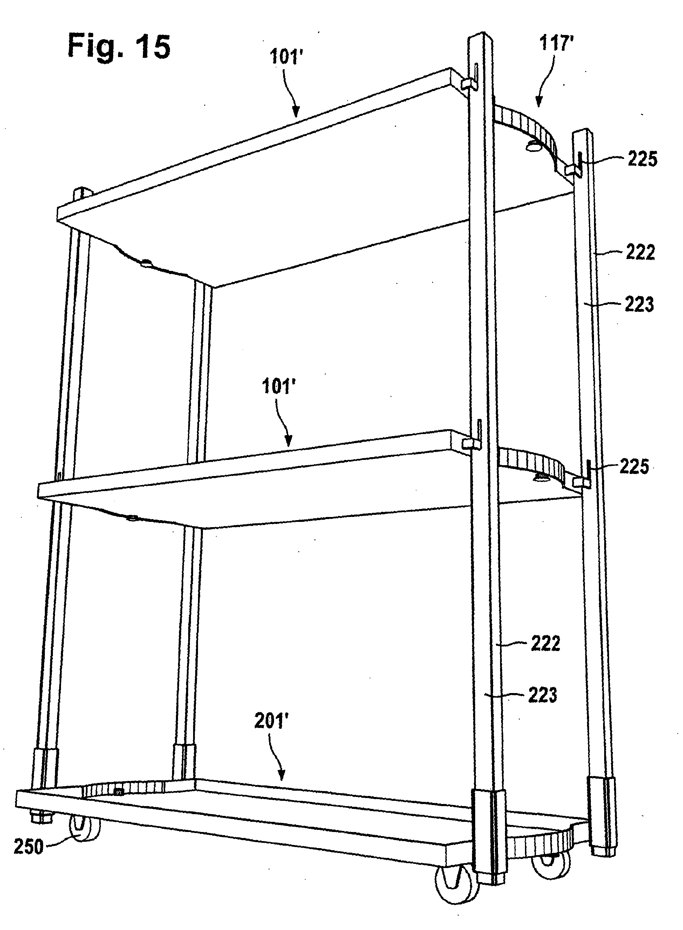

Fig. 13 zeigt eine zweite Ausführungsform einer Sockelplattform 201' zur Bildung einer zweiten Ausführungsform einer erfindungsgemäßen Bewässerungsvorrichtung (Fig. 14 und 15). Der einzige Unterschied zwischen den Sockelplattformen 201' und 201 besteht darin, daß zwei der vier Aufnahmemittel 260' (hier Vierkantrohre mit quadratischem Querschnitt) nicht exakt in den Eckbereichen, sondern einwärts versetzt angeordnet sind, damit die aufzunehmenden Gestellstreben zu den Positionen der gemäß Fig. 12 modifizierten Halterungselemente 130' und damit zu der Lagerungsplattform 101' passen.

Fig. 14 und 15 zeigen erläuterungshalber eine zweite Ausführungsform 117' der erfindungsgemäßen Bewässerungsvorrichtung, die unter Verwendung einer Sockelplattform 201' nach der zweiten Ausführungsform und mehreren Lagerungsplattformen 101' nach der zweiten Ausführungsform gebildet ist.

Im Gegensatz zu dem weiter oben beschriebenen Einhängevorgang bei einer aus dem Stand der Technik bekannten Lagerungsplattform erfolgt der Einhängevorgang einer Lagerungsplattform 101, 101' so, daß alle vier Einhängeschenkel 134 gleichzeitig in auf gleicher Höhe befindliche entsprechende Einhängeausnehmungen 225 eingesetzt werden. Hierbei ist ersichtlich kein Bewegungs- oder Handhabungsabstand zwischen den stirnseitigen Endbereichen oder Schmalseiten 106a der Lagerungsplattform und den Gestellstreben in Längsrichtung erforderlich. Statt dessen wird ein entsprechender Handhabungsabstand im Bereich zwischen der Erweiterung 124 und den Ecken 120 in Querrichtung benötigt, wo er allerdings ohnehin vorhanden ist.

Bei der Bewässerungsvorrichtung nach der ersten Ausführungsform besteht neben der bereits beschriebenen Variante, die Lagerungsplattformen in umgekehrter Orientierung (Oberseite nach unten weisend) in die Gestellstreben einzuhängen, eine andere, stärker platzsparende Lagerungsmöglichkeit der Lagerungsplattformen darin, daß die Lagerungsplattformen, bevorzugt ebenfalls in umgekehrter Orientierung (Oberseite nach unten weisend) nicht in die Einhängeausnehmungen eingehängt werden, sondern von der entgegengesetzten Seite der Bewässerungsvorrichtung her eingebracht werden, so daß die Einhänge-Endabschnitte der Lagerungsplattformen nicht in die Einhängeausnehmungen, sondern in Bereiche der Gestellstreben ragen, die frei von Material sind und - je nach Querschnittsform der Gestellstreben - einen in Längsrichtung der jeweiligen Gestellstrebe verlaufenden Schlitz bilden (insbesondere bei C- oder U-Form, in Fig. 16 mit 140 bezeichnet). Dies hat den Vorteil, daß die Lagerungsplattformen dicht an dicht, unmittelbar übereinanderliegend, aufeinandergestapelt werden können, ohne auf die vorgegebenen Abstände der Einhängeausnehmungen angewiesen zu sein. Auf diese Weise können mehr Lagerungsplattformen auf einer Sockelplattform gestapelt werden als bei normalem Einhängen, und außerdem wird Zeit gespart, da die Lagerungsplattformen nicht eingehängt, sondern nur aufeinandergelegt werden müssen.

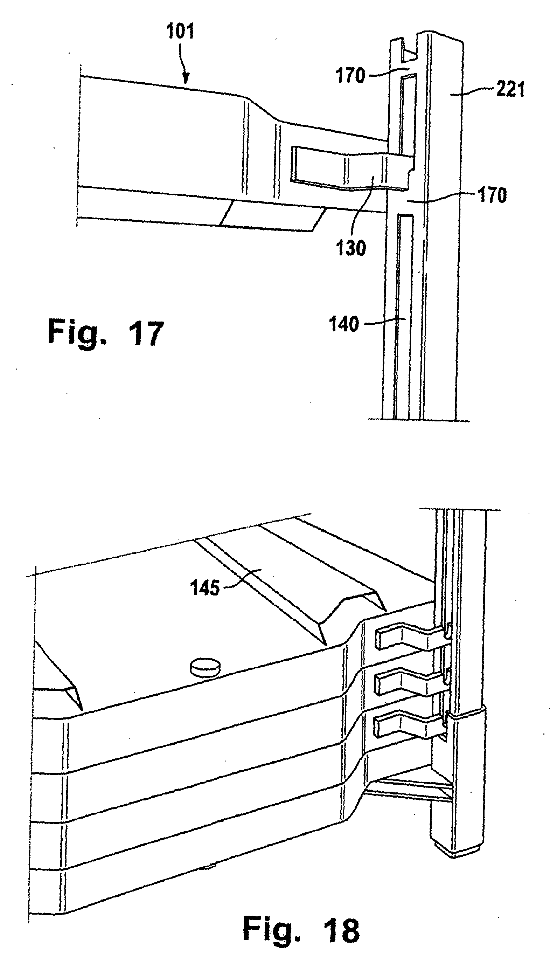

Fig. 18 zeigt eine derartige Stapelung der Lagerungsplattformen 40, wobei unterseitig an dem Boden 103 angebrauchte, im Querschnitt U-förmige Versteifungsprofile 145 die Tragfähigkeit des Bodens bzw. der Lagerungsplattform erhöhen und mit ihren stirnseitigen Endkanten gleichzeitig als Lagezentrierung für eine von oben aufgelegte, weitere Lagerungsplattform dienen.

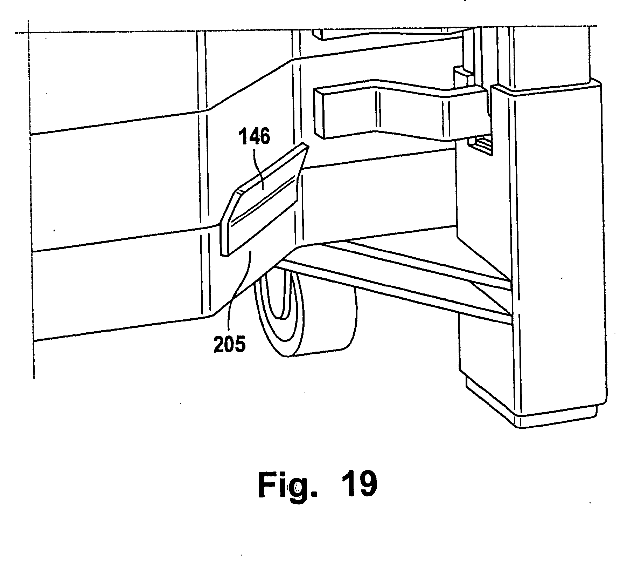

Um auch eine zentrierte Position einer untersten, also unmittelbar auf der Sockelplattform 201 aufliegenden Lagerungsplattform sicherzustellen, d.h. eine Position, in der die Seitenwand 105 der Lagerungsplattform im wesentlichen deckungsgleich auf der Seitenwand 205 der Sockelplattform 201 aufliegt, ohne daß eine seitliche Verschiebung auftritt, können gemäß Fig. 19 an der Seitenwand 205 der Sockelplattform Zentrierelemente 146 befestigt sein. In dem dargestellten Fall sind an den Erweiterungen 124, die in diesem Fall trapezförmig sind, jeweils außen zwei plattenförmige Zentrierelemente 146 (Fig. 19 zeigt nur eines davon) angeschweißt, wobei ein Teil jedes Zentrierelementes 146 nach oben über die Seitenwand vorsteht und somit eine Zentrierung für eine aufgelegte Lagerungsplattform bildet. Der nach oben vorstehende Teil des Zentrierelements ist leicht nach außen umgebogen, um das Auflegen einer Lagerungsplattform zu erleichtern.

Wenn die Gestellstreben außerdem an ihren Endbereichen mit einem, oder mit zwei beabstandeten, Steg(en) 170 versehen sind, wie Fig. 16 zeigt, besteht die Möglichkeit, eine oder zwei oberste Lagerungsplattformen in der umgekehrten Orientierung einzuhängen, sofern deren Einhänge-Endabschnitte jeweils zwei Ausnehmungen 136, 136a aufweisen (Fig. 3), wodurch die Bewässerungsvorrichtung im Bereich der oberen Enden der Gestellstreben eine verbesserte Stabilität erhält und ein unerwünschtes Auseinanderbewegen der Gestellstreben verhindert wird. Fig. 17 zeigt eine in Gebrauchsstellung in derartige Stege 170 eingehängte Lagerungsplattform 101.

Um zu verhindern, daß dann, wenn zahlreiche Lagerungsplattformen unmittelbar aufeinandergestapelt sind, die Einhänge-Endabschnitte der untersten, unmittelbar auf der Sockelplattform aufliegenden Lagerungsplattform das gesamte Gewicht der Lagerungsplattformen tragen müssen, sind vorteilhafterweise in den Aufnahmemitteln bzw. Vierkantrohren der Sockelplattform Ausschnitte 262 eingearbeitet, in die die Einhänge-Endabschnitte einer zuunterst liegenden Lagerungsplattform unbelastet hineinragen können. Die Ausschnitte 262 stellen gewissermaßen Verlängerungen der Schlitzbereiche der Gestellstreben dar und haben, gemessen von den oberen Enden der Aufnahmemittel 260, eine Länge t, Fig. 8, die so bemessen ist, daß die Einhänge-Endabschnitte der untersten, umgekehrt auf die Sockelplattform aufgelegten Lagerungsplattform nicht auf dem Aufnahmemittel aufliegen. Die Angabe "umgekehrt aufgelegt" bezieht sich hierbei auf eine bezüglich ihrer normalen Gebrauchsposition zur Aufnahme von Pflanzen und Wasser um 180° um ihre Längsmittelachse gedrehte Orientierung, in der ihre Oberseite nach unten und die Einhänge-Endabschnitte in eine entgegengesetzte Richtung weisen wie in Gebrauchsstellung.

### Bezugszeichenliste

- 101, 101': Lagerungsplattform
- 103: Boden
- 105: Seitenwand
- 106a: Schmalseite
- 106b: Längsseite
- 106c: erste Längsseite
- 106d: gerader Abschnitt (von 106a)
- 107: Öffnung
- 109: Überlauf (Ableitelement)
- 110: zylindrischer Grundkörper
- 111: Bodenwand
- 112: Abflußöffnung
- 113: Längsachse
- 114: Rastmittel/Markierung
- 116: oberer Rand
- 117, 117': Bewässerungsvorrichtung
- 118: Anschlag
- 119: Absatz
- 120: Ecke (von 101)
- 124: Erweiterung
- 126: Längsachse (von 101, 101')
- 130, 130': Halterungselement
- 132: Halteschenkel
- 134, 134': Einhängeschenkel
- 136, 136a: Ausnehmung
- 140: Längsschlitz (von 221)
- 145: Versteifungsprofil
- 170: Steg

- 201, 201': Sockelplattform
- 203: Boden
- 205: Seitenwand
- 207: Öffnung (für 109)
- 220: Ecke
- 221: Gestellstrebe
- 222: Schenkelabschnitt
- 223: Stegabschnitt
- 225: Einhängeschlitz / -ausnehmung
- 250: Rolle
- 260, 260': Aufnahmemittel
- 261: Anschlag
- 262: Ausschnitt

- d: Dicke (von 132)
- B: Breite innen (101, 101', 201, 201')
- Ba: Breite außen (101, 101', 201, 201')
- h: Pegel
- L: Länge innen (von 101, 101', 201, 201')
- La: Länge außen (von 101, 101', 201, 201')
- 1: lichter Abstand (von 221)
- t: Länge (von 262)

## Patentansprüche

1. Lagerungsplattform (101, 101') zum Lagern, Bewässern und Transportieren von Pflanzen, die rechteckig ist und an zwei parallelen Schmalseiten (106a) jeweils zwei Halterungselemente (130) zum Einhängen in Gestellstreben (221) aufweist, **dadurch gekennzeichnet, daß** jedes Halterungselement (130) einen entlang der jeweiligen Schmalseite (106a) verlaufenden und in Richtung einer ersten Längsseite (106c) frei endenden Einhänge-Endabschnitt (134) aufweist.

2. Lagerungsplattform nach Anspruch 1, **dadurch gekennzeichnet, daß** zwei der ersten Längsseiten (106c) benachbarte Einhänge-Endabschnitte (134) in der ersten Längsseite (106c) zugeordneten Eckbereichen (120) der Lagerungsplattform (101, 101') angeordnet sind.

3. Lagerungsplattform nach Anspruch 2, **dadurch gekennzeichnet, daß** die zwei anderen Einhänge-Endabschnitte (134) in den gegenüberliegenden Eckbereichen (120) angeordnet sind.

4. Lagerungsplattform nach Anspruch 2, **dadurch gekennzeichnet, daß** die zwei anderen Einhänge-Endabschnitte (134) an zwischen den Längsseiten (106b, c) liegenden Positionen angeordnet sind.

5. Lagerungsplattform nach einem der vorangehenden Ansprüche, **dadurch gekennzeichnet, daß** die Halterungselemente (130) abgewinkelt ausgebildet sind und einen Halteschenkel (132) und einen den Eingriffs-Endabschnitt bildenden Einhängeschenkel (134) aufweisen.

6. Lagerungsplattform nach Anspruch 5, **dadurch gekennzeichnet, daß** die Halteschenkel (132) an einer Seitenwand (105) befestigt sind.

7. Lagerungsplattform nach einem der Ansprüche 1 bis 6, **dadurch gekennzeichnet, daß** die Einhänge-Endabschnitte (134) mindestens eine Ausnehmung (136, 136a) zum formschlüssigen Einhängen in Gestellstreben (221) aufweisen.

8. Lagerungsplattform nach einem der Ansprüche 1 bis 7, **dadurch gekennzeichnet, daß** die Schmalseiten (106a) zwischen den Halterungselementen (130) jeweils mit einer Erweiterung (124) versehen sind, innerhalb der jeweils ein Überlauf (109) angeordnet ist.

9. Lagerungsplattform nach einem der vorangehenden Ansprüche, **dadurch gekennzeichnet, daß** an einer Unterseite Rollen (250) angeordnet sind.

10. Lagerungsplattform nach einem der vorangehenden Ansprüche, **dadurch gekennzeichnet, daß** die Lagerungsplattform wannenartig ausgebildet ist und einen Überlauf (109) zum Vorgeben eines gewünschten Flüssigkeitspegels aufweist.

11. Lagerungsplattform nach Anspruch 10, **dadurch gekennzeichnet, daß** die Lagerungsplattform umlaufend mit Seitenwänden (105) versehen ist.

12. Lagerungsplattform nach Anspruch 10 oder 11, **dadurch gekennzeichnet, daß** der Überlauf (109) zum Einstellen eines gewünschten Flüssigkeitspegels stufenlos oder stufenweise höhenverstellbar ist.

13. Lagerungsplattform nach Anspruch 12, **dadurch gekennzeichnet, daß** der Überlauf (109) optische Markierungen und/oder mechanische Rastmittel (114) in vorbestimmten Positionen aufweist.

14. Lagerungsplattform nach einem der Ansprüche 10 bis 13, **dadurch gekennzeichnet, daß** der Überlauf (109) mindestens eine seitlich gerichtete Abflußöffnung (112) aufweist.

15. Lagerungsplattform nach Anspruch 14, **dadurch gekennzeichnet, daß** der Überlauf (109) drehbar in einer Öffnung (107) gehalten ist.

16. Bewässerungsvorrichtung (117, 117') mit mindestens zwei übereinander angeordneten Lagerungsplattformen (101, 101') zum Lagern, Bewässern und Transportieren von Pflanzen, insbesondere nach einem der vorangehenden Ansprüche, die rechteckig sind und an zwei parallelen Schmalseiten (106a) jeweils zwei Halterungselemente (130) aufweisen, mit vier vertikalen Gestellstreben (221), die an Schmalseiten (106a) der Lagerungsplattformen (101) angeordnet und mit Einhängeausnehmungen (225) zum Einhängen der Halterungselemente (130) versehen sind, wobei jedes Halterungselement (130) einen entlang der jeweiligen Schmalseite (106a) verlaufenden und in Richtung einer ersten Längsseite (106c) frei endenden Einhänge-Endabschnitt (134) aufweist.

17. Bewässerungsvorrichtung nach Anspruch 16, **dadurch gekennzeichnet, daß** die Gestellstreben (221) L-,U-,C- oder Rechteckprofile sind.

18. Bewässerungsvorrichtung nach Anspruch 16 oder 17, **dadurch gekennzeichnet, daß** die Gestellstreben (221) lösbar an einer Sockelplattform (201, 201') gehalten sind, die in Form und Größe den Lagerungsplattformen (101, 101') entspricht.

19. Bewässerungsvorrichtung nach Anspruch 18, **dadurch gekennzeichnet, daß** die Sockelplattform Laufrollen, eine Bodenwand (203) und eine umlaufende Seitenwand (205) aufweist.

20. Bewässerungsvorrichtung nach Anspruch 18 oder 19, **dadurch gekennzeichnet, daß** die Sockelplattform Aufnahmemittel (260) für die Gestellstreben (221) aufweist, die mit Ausschnitten (262) versehen sind

## Claims

1. Storage platform (101, 101') for storing, watering and transporting plants, which platform is rectangular and has in each case two support elements (130) on two parallel narrow sides (106a) for suspension in frame struts (221), **characterised in that** each support element (130) has a suspension end portion (134) running along the respective narrow side (106a) and having free ends in the direction of a first longitudinal side (106c).

2. Storage platform according to Claim 1, **characterised in that** two suspension end portions (134) adjacent to the first longitudinal sides (106c) are arranged in corner regions (120), which are assigned to the first longitudinal side (106c), of the storage platform (101, 101').

3. Storage platform according to Claim 2, **characterised in that** the two other suspension end portions (134) are arranged in the opposite corner regions (120).

4. Storage platform according to Claim 2, **characterised in that** the two other suspension end portions (134) are arranged at positions situated between the longitudinal sides (106b, c).

5. Storage platform according to one of the preceding claims, **characterised in that** the support elements (130) are formed at an angle and have a holding limb (132) and a suspension limb (134) which forms the engagement end portion.

6. Storage platform according to Claim 5, **characterised in that** the holding limbs (132) are fastened on a side wall (105).

7. Storage platform according to one of Claims 1 to 6, **characterised in that** the suspension end portions (134) have at least one recess (136, 136a) for positive-locking suspension in frame struts (221).

8. Storage platform according to one of Claims 1 to 7, **characterised in that** the narrow sides (106a) are provided in each case with an extension (124) between the support elements (130), within which extension in each case an overflow (109) is arranged.

9. Storage platform according to one of the preceding claims, **characterised in that** rollers (250) are arranged on an underside.

10. Storage platform according to one of the preceding claims, **characterised in that** the storage platform is formed in a tub-like shape and has an overflow (109) to specify a desired fluid level.

11. Storage platform according to Claim 10, **characterised in that** the storage platform is provided circumferentially with side walls (105).

12. Storage platform according to Claim 10 or 11, **characterised in that** the overflow (109) can be height-adjusted continuously or in a graduated manner for setting of a desired fluid level.

13. Storage platform according to Claim 12, **characterised in that** the overflow (109) has visual marks and/or mechanical catch means (114) in predetermined positions.

14. Storage platform according to one of Claims 10 to 13, **characterised in that** the overflow (109) has at least one laterally directed outlet opening (112).

15. Storage platform according to Claim 14, **characterised in that** the overflow (109) is rotatably held in an opening (107).

16. Watering device (117, 117') with at least two storage platforms (101, 101') arranged on top of one another for storing, watering and transporting plants, in particular according to one of the preceding claims, which platforms are rectangular and have in each case two support elements (130) on two parallel narrow sides (106a), with four vertical frame struts (221) which are arranged on narrow sides (106a) of the storage platforms (101) and are provided with suspension recesses (225) for suspension of the support elements (130), wherein each support element (130) has a suspension end portion (134) running along the respective narrow side (106a) and having free ends in the direction of a first longitudinal side (106c).

17. Watering device according to Claim 16, **characterised in that** the frame struts (221) are L-shaped, U-shaped, C-shaped or rectangular profiles.

18. Watering device according to Claim 16 or 17, **characterised in that** the frame struts (221) are detachably held on a base platform (201, 201') which corresponds to the storage platforms (101, 101') in terms of shape and size.

19. Watering device according to Claim 18, **characterised in that** the base platform has running rollers, a bottom wall (203) and a circumferential side wall (205).

20. Watering device according to Claim 18 or 19, **characterised in that** the base platform has receiving means (260) for the frame struts (221) which are provided with cut-outs (262).

## Revendications

1. Palette de stockage (101, 101') pour entreposer, irriguer et transporter des plantes, de forme rectangulaire et présentant, sur chacun de deux côtés étroits (106a) parallèles, deux éléments de fixation (130) pour l'accrochage dans des entretoises de bâti (221), **caractérisée en ce que** chaque élément de fixation (130) présente un tronçon d'extrémité d'accrochage (134), s'étendant le long du côté étroit (106a) respectif et s'achevant librement en direction d'un premier côté longitudinal (106c).

2. Palette de stockage selon la revendication 1, **caractérisée en ce que** deux tronçons d'extrémité d'accrochage (134), voisins des premiers côtés longitudinaux (106c), sont disposés dans des zones d'angle (120), associées au premier côté longitudinal (106c), de la palette de stockage (101, 101').

3. Palette de stockage selon la revendication 2, **caractérisée en ce que** les deux autres tronçons d'extrémité d'accrochage (134) sont disposés dans les zones d'angle (120) opposées.

4. Palette de stockage selon la revendication 2, **caractérisée en ce que** les deux autres tronçons d'extrémité d'accrochage (134) sont disposés en des positions situées entre les côtés longitudinaux (106b, c).

5. Palette de stockage selon l'une des revendications précédentes, **caractérisée en ce que** les éléments de fixation (130) sont de configuration coudée et présentent une branche de maintien (132) et une branche d'accrochage (134) formant le tronçon d'extrémité d'engagement.

6. Palette de stockage selon la revendication 5, **caractérisée en ce que** les branches de maintien (132) sont fixées à une paroi latérale (105).

7. Palette de stockage selon l'une des revendications 1 à 6, **caractérisée en ce que** les tronçons d'extrémité d'accrochage (134) présentent au moins un évidement (136, 136a) pour l'accrochage, avec liaison à ajustement de forme, dans des entretoises de bâti (221).

8. Palette de stockage selon l'une des revendications 1 à 6, **caractérisée en ce que** les côtés étroits (106) entre les éléments de fixation (130) sont chacun munis d'un élargissement (124), à l'intérieur duquel un déversoir (109) est chaque fois disposé.

9. Palette de stockage selon l'une des revendications précédentes, **caractérisée en ce que** des roulettes (250) sont disposées sur une face inférieure.

10. Palette de stockage selon l'une des revendications précédentes, **caractérisée en ce que** la palette de stockage est conformée en cuve, et présente un déversoir (109) pour fournir un niveau de liquide souhaité.

11. Palette de stockage selon la revendication 10, **caractérisée en ce que** la palette de stockage est munie de parois latérales (105) en pourtour.

12. Palette de stockage selon la revendication 10 ou 11, **caractérisée en ce que** le déversoir (109) est réglable en hauteur, de façon progressive continue ou de façon étagée, pour régler un niveau de liquide souhaité.

13. Palette de stockage selon la revendication 12, **caractérisée en ce que** le déversoir (109) présente des marquages optiques et/ou des moyens d'encliquetage (114) mécaniques, en des positions prédéterminées.

14. Palette de stockage selon l'une des revendications 10 à 13, **caractérisée en ce que** le déversoir (109) présente au moins une ouverture d'évacuation (112) orientée latéralement.

15. Palette de stockage selon la revendication 14, **caractérisée en ce que** le déversoir (109) est maintenu à rotation dans une ouverture (107).

16. Dispositif d'irrigation (117, 117') comprenant au moins deux palettes de stockage (101, 101') disposées l'une au-dessus de l'autre, pour entreposer, irriguer et transporter des plantes, en particulier selon l'une des revendications précédentes, de forme rectangulaire et présentant, sur chacun de deux côtés étroits (106a) parallèles, deux éléments de fixation (130), avec quatre entretoises de bâti (221) verticales, disposées sur des côtés étroits (106a) des palettes de stockage (101), et avec des évidements d'accrochage (225) pour l'accrochage des éléments de fixation (130), chaque élément de fixation (130) présentant un tronçon d'extrémité d'accrochage (134), s'étendant le long du côté étroit (106a) respectif et s'achevant librement en direction d'un premier côté longitudinal (106c).

17. Dispositif d'irrigation selon la revendication 16, **caractérisé en ce que** les entretoises de bâti (221) sont des profilés en L, en U, en C ou rectangulaires.

18. Dispositif d'irrigation selon la revendication 16 ou 17**, caractérisé en ce que** les entretoises de bâti (221) sont maintenues de façon désolidarisable sur une palette formant socle (201, 201'), correspondant, en taille et en forme, aux palettes de stockage (101, 101').

19. Dispositif d'irrigation selon la revendication 18, **caractérisé en ce que** la palette formant socle présente des roulettes, une paroi de fond (203) et une paroi latérale (205) de pourtour.

20. Dispositif d'irrigation selon la revendication 18 ou 19, **caractérisé en ce que** la palette formant socle présente des moyens de réception (260) pour les entretoises de bâti (221), munis de découpures (262).
